Europäisches Patentamt

European Patent Office

Office européen des brevets

(11) Numéro de publication: **0 220 752**
**A2**

## (12) DEMANDE DE BREVET EUROPEEN

(21) Numéro de dépôt: **86201204.4**

(22) Date de dépôt: **09.07.86**

(51) Int. Cl.⁴: **G08G 5/06**

(30) Priorité: **20.09.85 BE 215616**

(43) Date de publication de la demande:
**06.05.87 Bulletin  87/19**

(84) Etats contractants désignés:
**AT CH DE FR GB IT LI LU NL SE**

(71) Demandeur: **D.R.I.M. LIMITED**
**178-180 Church Road**
**Hove East Sussex BN3 2BD(GB)**

(72) Inventeur: **Julin, Michel**
**Rue L. Thonon 39**
**B-4450 Liers(BE)**
Inventeur: **Henderyckx, Hubert**
**Domaine du Bois Gillet 9**
**B-5120 Vezin(BE)**

(74) Mandataire: **Thirion, Robert et al**
**Bureau GEVERS S.A. 7, rue de Livourne Bte**
**1**
**B-1050 Bruxelles(BE)**

(54) **Procédé pour le contrôle au sol des mobiles sur un aéroport et installation pour la mise en oeuvre de ce procédé.**

(57) Procédé pour le contrôle au sol, soit de nuit ou par mauvaise visibilité, soit par bonne visibilité lorsqu'il n'est pas possible d'avoir de la tour de contrôle une bonne vue d'ensemble de l'aéroport, de tous les engins, avions et véhicules, tels que véhicules de service et de sécurité, stationnant ou circulant sur le site de l'aéroport, en particulier les pistes d'envol ou d'atterrissage ainsi que toutes les voies d'accès à ces pistes, et installation pour la mise en oeuvre de ce procédé.

Fig.1.

EP 0 220 752 A2

## "Procédé pour le contrôle au sol des mobiles sur un aéroport et installation pour la mise en oeuvre de ce procédé".

La présente invention a pour objet un procédé pour le contrôle au sol, soit de nuit ou par mauvaise visibilité, soit par bonne visibilité lorsqu'il n'est pas possible d'avoir de la tour de contrôle une bonne vue d'ensemble de l'aéroport, de tous les engins, avions et véhicules, tels que véhicules de service et de sécurité, stationnant ou circulant sur le site de l'aéroport, en particulier les pistes d'envol ou d'atterrissage ainsi que toutes les voies d'accès à ces pistes. En général, lorsque la visibilité est bonne, le personnel de la tour de contrôle assure, à vue, le guidage au sol des avions et véhicules divers se déplaçant sur l'ensemble des pistes et voies d'accès de l'aérodrome, car il peut suivre et contrôler la circulation globale et donner, par liaison radio, les indications aux opérateurs des avions et véhicules pour le bon déroulement des opérations.

Il n'en est plus de même lorsque la visibilité à partir de la tour de contrôle est réduite et que le personnel de la tour n'a plus à sa disposition que les liaisons radio avec les avions et véhicules au sol alors que les informations fournies quant à la localisation précise de chacun des mobiles au sol peuvent être sujettes à caution. En effet, en ce qui concerne la position au sol des avions, qui est donnée par les pilotes, celle-ci ne peut être contrôlée de manière absolue par le personnel de la tour et un doute peut subsister quant à la position réelle des avions surtout lorsque les informations sont fournies par des pilotes peu familiarisés avec l'aéroport où ils font escale. Cette situation s'est encore aggravée depuis que les avions commerciaux décollent et atterrissent avec une visibilité de 100 à 150 mètres.

Par mauvaise visibilité, on dispose, sur un nombre réduit d'aéroports pour lesquels l'investissement très important a pu être consenti, de radars de sol et radars de veille qui, s'ils permettent d'améliorer la situation, présentent encore des inconvénients sérieux. En effet, les informations fournies par ces radars ne sont pas parfaitement fiables. Par exemple, lorsque le personnel de la tour autorise un avion à décoller et qu'il est dans l'impossibilité de suivre à vue cet avion, il ne pourra suivre sur les radars les diverses phases du décollage. Si l'avion autorisé à décoller ne prend pas son envol, le personnel de la tour restera dans l'incertitude tant qu'une liaison radio n'aura pas été établie avec le pilote de l'avion. Ces radars restent donc dans certains cas tributaires des liaisons radio, avec tous les aléas précités attachés à ces dernières. De plus, ces radars ne permettent pas d'identifier les mobiles en mouvement ou à l'arrêt sur l'aéroport, ils ne peuvent que constater leur présence. En outre, ces radars font essentiellement appel à l'appréciation des informations fournies par le personnel de la tour, d'où possibilité de défaillance humaine et ce, d'autant plus qu'un individu ne peut contrôler qu'environ 50 points lumineux différents et que la permanence rétinienne peut encore entrer en jeu lors du passage d'un écran à un autre.

L'invention a pour but de remédier à ces inconvénients et de procurer un procédé et une installation pouvant renseigner le personnel de la tour de contrôle sur la situation des mobiles au sol, de manière fiable et précise, avec identification desdits mobiles, et ce, sans avoir recours aux liaisons radios.

A cet effet, suivant l'invention, le procédé consiste à disposer, au moins le long des pistes et à leurs extrémités ainsi qu'aux intersections éventuelles de toutes les voies d'accès aux pistes, des systèmes de contrôle différents fournissant chacun des informations distinctes relatives au moins aux mobiles, à l'arrêt ou en mouvement, se trouvant sur le site, à analyser toutes les informations susdites par ordinateur dont les mémoires contiennent les caractéristiques des mobiles circulant sur le site, à activer, à partir de l'ordinateur, d'une part, des écrans cathodiques et/ou synoptiques permettant aux contrôleurs de visualiser les pistes et accès ainsi que tous les éléments, en particulier les mobiles, à l'arrêt ou en mouvement, présents sur ces pistes et accès avec des caractéristiques d'identification, et, d'autre part, des moyens de signalisation prévus sur le site et destinés à donner des indications quant aux libertés et interdictions de circuler et des moyens d'alarme associés aux écrans activés quand une interdiction n'est pas respectée.

Suivant une forme avantageuse de l'invention, sur base des informations traitées par l'ordinateur et dès que le contrôleur autorise la circulation d'un avion sur une voie ou piste donnée, l'ordinateur crée le long de celle-ci une zone de protection.

L'installation suivant l'invention comprend au moins des moyens de contrôle associés aux pistes d'envol et d'atterrissage et agencés pour détecter tout élément situé sur ces pistes, en particulier les mobiles à l'arrêt ou en mouvement, des moyens de contrôle associés aux voies d'accès éventuelles et à toutes les intersections de ces dernières avec les pistes et agencés pour détecter tout mobile à l'arrêt ou en mouvement sur lesdites voies d'accès à proximité de ces intersections, des moyens pour transmettre les informations en provenance des moyens de contrôle à un ordinateur agencé pour comparer les informations reçues des moyens de contrôle précités à des informations mises en mémoire et concernant les divers mobiles autorisés à se déplacer sur les pistes et voies d'accès, des écrans cathodiques et/ou synoptiques disposés au moins dans la tour de contrôle et activés par l'ordinateur pour visualiser, d'une part, les pistes et voies d'accès à celles-ci et, d'autre part, les éléments et en particulier les mobiles, à l'arrêt ou en mouvement sur ces voies et pistes munies de moyens de contrôle, avec leurs caractéristiques d'identification, des moyens de signalisation optiques et/ou sonores associés aux pistes et voies d'accès pour renseigner les opérateurs des mobiles au sujet des libertés et interdictions de circuler dans les zones protégées par les moyens de contrôle et des moyens d'alarme associés aux écrans précités et agencés pour être activés par l'ordinateur quand une interdiction de circuler n'est pas respectée.

D'autres détails et particularités de l'invention ressortiront de la description des dessins annexés au présent mémoire et qui représentent, à titre d'exemple non limitatif, une forme de réalisation particulière de l'installation et illustrent le procédé suivant l'invention.

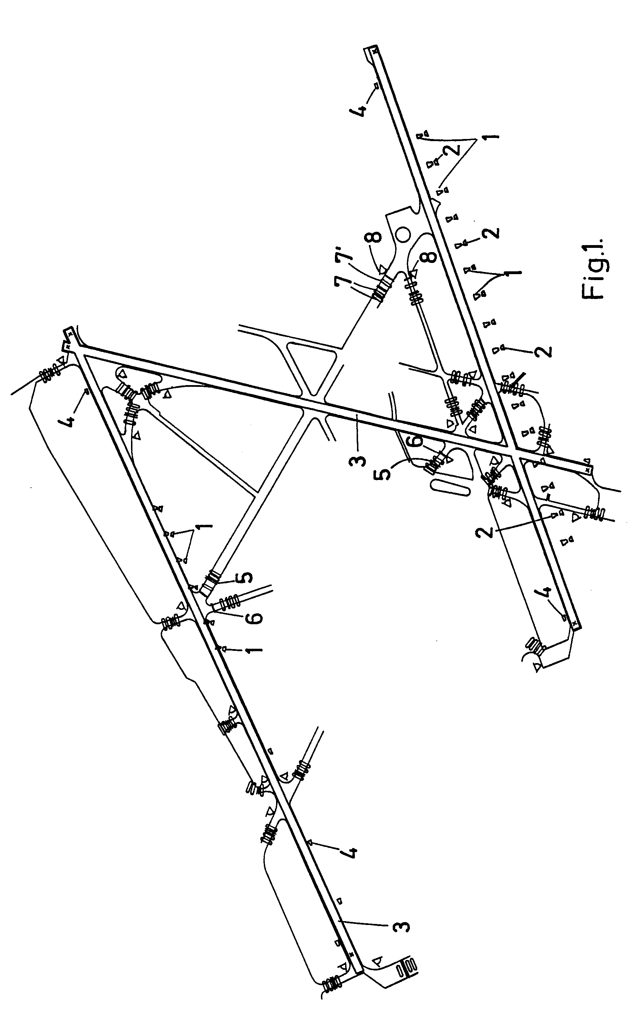

La figure 1 est une vue schématique, en plan, d'un aéroport équipé de l'installation précitée.

La figure 2 est une vue analogue à la figure 1 montrant un détail de ladite installation.

Dans les différentes figures, les mêmes signes de référence désignent des éléments identiques.

Il est évident que le procédé et l'installation suivant l'invention devront être adoptés en fonction des caractéristiques propres de chacun des aéroports concernés et que la multiplicité des moyens de contrôle nécessaires pour assurer une sécurité automatique maximum, au sol, de la circulation des mobiles dépendra essentiellement du nombre de pistes à protéger et de l'interpénétration de ces pistes entre elles et avec un nombre plus ou moins élevé de voies d'accès aux pistes. Pour des aéroports qui ne posséderaient qu'une ou plusieurs pistes ne se croisant pas et n'étant pas recoupées par des voies d'accès, il suffirait, pour obtenir une excellente sécurité, de munir la ou chacune des pistes de moyens de contrôle constatant la présence ou l'absence d'éléments, en particulier mobiles, sur les pistes. Dans ce cas, la sécurité pourrait être accrue en contrôlant également l'accès en bout de chacune des pistes.

Pour les aéroports dont les pistes et les voies d'accès se croisent, il conviendra, pour atteindre le niveau de sécurité équivalent à celui obtenu ci-dessus, de créer à chaque point d'intersection, en plus des moyens de contrôle des pistes, une zone protégée surveillée par un ou plusieurs moyens de contrôle propres à ces intersections.

Dans l'un et l'autre cas, la sécurité pourra être encore accrue en munissant au moins les véhicules de service de moyens optiques ou sonores renseignant automatiquement les opérateurs des dangers que peut présenter l'endroit où lesdits véhicules se trouvent ou vont aborder.

Il est également intéressant de pouvoir vérifier si les véhicules d'intervention, pompiers et ambulances, occupent leurs emplacements, qui sont bien déterminés sur l'aéroport. Dans ce but, des moyens sont prévus auxdits emplacements et dans les véhicules pour fournir les informations requises.

Dans tous les cas, les informations recueillies sont transmises à un ordinateur qui active des moyens audio-visuels situés au moins dans la tour de contrôle. De tels moyens peuvent en effet également être prévus à l'emplacement réservé aux véhicules d'intervention.

Dans tous les cas, l'ordinateur est agencé pour traiter les informations reçues des divers moyens et déclencher automatiquement tous les signaux optiques ou sonores assurant la sécurité de circulation. L'ordinateur est également agencé pour refuser une commande en conflit avec les informations provenant des différents moyens de contrôle.

Dans le cas où on ne surveille que la ou les pistes de l'aéroport, le scénario général consiste à acquérir des informations fournies par les moyens de contrôle, à traiter ces informations par ordinateur, à visualiser ces informations, à suivre l'atterrissage ou le décollage, à ramener en position d'attente après décollage ou atterrissage.

Pour obtenir un résultat valable, il est impératif d'incorporer dans le système, des moyens de contrôle alimentés par des réseaux indépendants pour des raisons tant électriques que techniques - (parasites, effets de réverbérations, radars).

Deux moyens de contrôle différents minimum sont nécessaires pour obtenir une sécurité totale.

Ces moyens de contrôle seront constitués par deux types de radars 1 et 2, des radars 1 à faisceau étroit le long des pistes 3 et des radars 2 à faisceau large répartis également à des distances variables le long desdites pistes 3. Les radars 1 seront installés tous les 150 m sur le bord de la piste à la hauter prescrite et ce en un alignement parallèle aux lampes de balisage des pistes et à ± 1 m de celles-ci. Chacun des radars à faisceau étroit 1 fonction ne sur une fréquence de 9,9 gigaHz et est utilisé pour analyser le déplacement des avions sur la piste. L'effet doppler permet ce contrôle quel que soit le sens de déplacement de l'avion. Placés transversalement et de préférence perpendiculairement à l'axe de la piste 3 de façon à bénéficier au maximum de l'effet doppler, le champ de vision avoisine les 9 degrés.

Les radars 2 à faisceau large seront répartis le long de la piste 3, un radar sera installé en début de piste afin de couvrir un large espace comprenant entre autres la zone d'attente des avions avant le décollage. Aux endroits de décollage ou d'atterrissage possibles et en fin de piste, les radars 2 seront dotés d'une inclinaison adéquate permettant de suivre l'avion en vol. Des caméras de télévision 4 seront également prévues pour compléter les informations fournies par les radars 1 et 2, elles fonctionneront avec des luminosités excessivement faibles (tubes infrarouges) et seront placées aux endroits stratégiques de façon que le contrôleur puisse visualiser différents paramètres (type d'avion ou d'autre mobile, arrêt ou mouvement de celui-ci). Les différents radars 1, à faisceau étroit, échelonnés à 150 le long de la piste 3, détectent le passage de l'avion et mesurent le temps que mettra celui-ci pour sortir du faisceau. Le radar 2, à faisceau large, en début de piste, vu la conception de sa cavité et de ses circuits, déterminera le début du processus de traitement. Au fur et à mesure de sa progression, l'avion coupera le faisceau des différents radars 1 et ce de plus en plus vite vu qu'il sera en accélération constante. Le radar 2 de fin de piste ou situé à l'endroit de décollage le détectera en altitude et ce pendant un laps de temps plus important. La non détection par les radars 2 permettra d'être certain que l'avion a bien décollé. L'ordinateur recevant les données ou informations des radars permettra par comparaison de suivre l'accélération, mais, comme les angles des faisceaux ne sont jamais rigoureusement identiques, il calculera la vitesse instantannée pour le passage à chaque radar et vérifiera ainsi les données de comparaison. Le programme est également prévu pour éliminer les détections parasites dues aux oiseaux et aux lièvres se déplaçant sur le site. Ce qui est énoncé pour le décollage est vrai pour l'atterrissage. Les caméras 4 permettront de visualiser l'avion en attente de décollage ainsi que lors de son trajet sur la piste 3. L'ordinateur numérise et mémorise les images reçues; il les compare aux modules de sa bibliothèque et identifie donc le mobile. Le module objet est intégré et positionné sur un écran cathodique et/ou synoptique pour que son déplacement soit pour le contrôleur une visualisation réelle de ce qui se passe sur la piste 3. Lorsque le contrôleur a autorisé le pilote à se mettre en bout de piste 3, il met en fonction par un commutateur le programme de gestion de la piste, ce qui active les caméras 4 et les systèmes radars 1 et 2. Sur les écrans grand format, le contrôleur voit apparaître la piste et le module objet de l'avion. Une fenêtre clignotante lui signale que le radar 2 en début de piste a également pris en charge l'appareil. Le contrôleur peut ainsi donner l'ordre de décollage qui sera suivi par les caméras 4 jusqu'à la limite de leur champ d'action. Lors du passage de l'avion dans le champ d'un radar 1, la fenêtre correspondant à celui-ci s'illumine et la représentation de l'avion se déplace sur l'écran synoptique permettant de suivre sa progression sur la piste. La caméra de bout de piste ou d'endroit de décollage transmet les données à l'ordinateur qui analyse les images reçues et qui active l'affichage sur l'écran du module objet de l'avion décollé. Le radar 2 le plus proche de l'endroit de décollage détecte l'avion en vol et permet à l'ordinateur d'analyser l'état des radars 1 qui sont inactifs vu que l'avion est en vol. Soit après un temps préprogrammé, soit par une action du contrôleur, la mise au repos du système permet à l'ordinateur de passer en phase statistique, ce qui engendrera éventuellement une impulsion des informations compilées du décollage.

Lorsque les pistes sont recoupées par d'autres pistes ou par des voies d'accès, le contrôle des intersections se décompose en deux fonctions bien distinctes, à savoir :

-la signalisation donnée au pilote d'avion ou au conducteur d'un véhicule arrivant à une intersection,

-l'acquisition de la donnée, son traitement et le transfert vers le contrôleur des résultantes données par l'ordinateur.

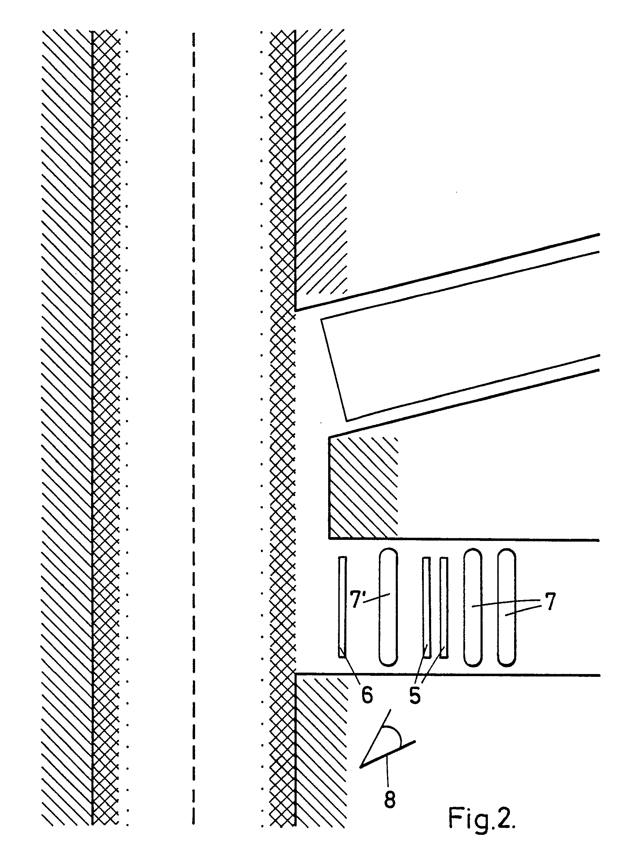

La signalisation sera réalisée au moyen de deux bandeaux 5 à base de fibres optiques (figure 2) figurant le "STOP". Ces bandeaux forment une signalisation vraiment efficace vu la disposition particulière des fibres optiques et la puissance lumineuse rayonnée par celles-ci. Lorsque le système est en position d'attente, le contrôleur peut remplacer l'émission de lumière rouge correspondant toujours à cette position d'attente par un rayonnement vert lorsqu'il décide d'autoriser l'accès de la piste. Un troisième bandeau optique 6 situé environ à 5 m en aval de la zone de contrôle, constituée notamment par les bandeaux 5, se mettra à clignoter au rouge si un mobile franchit intempestivement lesdits bandeaux de sécurité 5.

L'acquisition des données se fera de deux façons:

-par boucles magnétiques 7 et

- par radar 8.

Deux boucles magnétiques 7 seront installées dans le sol et permettront de détecter le passage de tous les mobiles qui les franchissent ainsi que leur sens de circulation. Au-delà des bandeaux 5, une troisième boucle magnétique 7' permettra de contrôler le respect des consignes fournies par ces bandeaux 5 et de donner une alerte à la tour de contrôle. Ces données seront affichées sur un synoptique par l'ordinateur qui tiendra compte des différents mouvements à l'approche des zones dangereuses.

Le radar 8 a pour but de contrôler par un autre canal les mesures effectuées par les boucles 7 et 7'. Il donnera les informations d'arrêt et de démarrage des mobiles. Ce radar 8 peut également être un élément générateur d'hyperfréquence qui influencerait des détecteurs prévus sur les mobiles et provoquerait l'émission de signaux optiques et/ou sonores pour avertir leur opérateur du danger.

Lorsqu'un avion a été autorisé à quitter son aire d'attente pour prendre place en bout de piste 3 en vue du décollage, le contrôleur fait passer la zone correspondant à cette piste au rouge ce qui a pour conséquence d'activer automatiquement tous les moyens de contrôle et de prévention. Il est évident que les actions prévues en cas de décollage s'appliquent également pour les atterrissages qui sont parfois imbriqués sur la même piste. Il est alors intéressant de créer une zone de sécurité automatique autour des points de conflit que sont les intersections de pistes avec les voies d'accès et les chemins utilisés par le personnel chargé d'éloigner les oiseaux des aires de décollage, etc.

Pour ce faire, on équipe d'un récepteur hyperfréquence un maximum de mobiles. Ce récepteur reçoit les informations émises par le dispositif zone rouge et donne une information auditive et visuelle à l'opérateur lorsqu'il pénètre dans la zone dangereuse.

Il faut considérer que les avions sur un aéroport sont prioritaires et que tout doit être fait pour ne pas déranger leurs évolutions.

Le but du système suivant l'invention est donc de prévenir toute circulation intempestive qui mettrait en danger les mobiles en présence.

Tous les véhicules de service sont équipés d'un récepteur hyperfréquence qui signalera immédiatement au conducteur qu'il s'engage dans une zone en activité ou qu'il va franchir une limite où

-une attention soutenue est de rigueur

-une autorisation de la tour est nécessaire.

Les véhicules étrangers à l'aéroport qui, pour des prestations, doivent circuler sur le site, recevront avantageusement un module portatif leur permettant ainsi d'avoir leur attention attirée à l'approche des zones dangereuses.

Sur les aéroports, les véhicules d'interventions occupent généralement un emplacement fixe et dédicacé. Un émetteur miniature hyperfréquence monté sur les véhicules permet de contrôler instantanément la présence desdits véhicules sur leur aire de stationnement vu qu'un récepteur y est incorporé.

Dans la tour de contrôle et éventuellement à l'emplacement des véhicules d'intervention, le personnel aura à sa disposition une unité du type audiovisuel. Elle sera composée d'un pupitre de commande, d'un écran synoptique et de deux ou trois écrans cathodiques. Pour que la visualisation soit efficace et puisse se percevoir sans réflexion, les états représentés aux écrans apparaîtront comme une rupture dans l'affichage général.

La représentation réelle des pistes et de leurs accès sera donc visualisée sur l'écran synoptique suivant le système de pavé, système similaire à celui utilisé à la SNCV dans les gares de triage, et ce à une échelle efficace.

Les données acquises par les différents moyens de contrôle et les résultats de leur traitement par l'ordinateur seront visualisées sur les écrans synoptique et cathodique. L'écran synoptique permettra de positionner et de suivre avec grande précision le déplacement des mobiles, l'écran cathodique, de préférence couleur, reprendra chacune des pistes et informera le contrôleur des opérations en cours.

Afin de bien préciser l'ensemble des opérations, les différentes phases d'un décollage, la piste étant au repos, von être décrites:

L'ensemble des signalisations est au rouge - (état de repos normal). Des véhicules circulent sur le site. Les véhicules de service sont sur leur aire de stationnement. L'écran synoptique est actif, car l'ordinateur tient en permanence compte des mobiles entrant et sortant des pistes, les écrans cathodiques passant automatiquement en position repos sont inactifs.

Lors d'une demande d'accès à la piste, un avion ayant quitté son terminal se dirige vers l'aire d'attente de la piste 3. Le contrôleur enclenche le processus de gestion du site. A ce moment, l'écran synoptique répercutera en clignotant la présence éventuelle d'un véhicule et émettra une signalisation optique et/ou sonore. La piste 3 passera en zone rouge et tous les véhicules se trouvant dans cette zone recevront sur leur récepteur hyperfréquence le signal optique et/ou sonore de zone dangereuse.

Lorsque le contrôleur le jugera utile, il donnera l'autorisation d'accès à la piste. Il sera informé à chaque instant de la situation vu que les données sont transmises en temps réel. De plus, afin de parer à une défaillance humaine et de manière à lui permettre de superviser le reste de l'aéroport, l'ordinateur l'avertira, en activant une alarme, si un conflit se présentait.

Le contrôleur, au moyen du module objet défini par la caméra, s'assure du type d'appareil qui est en instance de décollage et donne le feu vert. Au cas où il donne l'autorisation de décollage en présence d'un conflit, le système émet un signal d'avertissement et bloque les signalisations au rouge. Une commande de sécurité permet, après un laps de temps déterminé, de demander au système un nouvel essai.

L'avion se mettant en branle sur la piste 3 sera accompagné par une des caméras 4 et les radars de piste 1 et 2 qui permettront à l'ordinateur de suivre le décollage et de renseigner de façon continue le contrôleur sur l'accélération continue du mobile, grâce à l'écran synoptique. L'avion ayant décollé sera pris par le radar à large faisceau 2 susdit et l'ordinateur ne recevant aucune information des radars 1 affichera sur l'écran synoptique l'état décollé. La caméra de bout de piste confirmera la disparition de l'avion.

Le contrôleur au moyen de cette caméra pourra en cas de non décollage de l'avion suivre les évolutions de l'appareil en difficulté et déterminer de visu les interventions que la situation requiert car il sera averti par l'ordinateur dès que l'avion subira une décélération significative.

Le contrôleur, ayant constaté la bonne exécution de la manoeuvre, mettra le système en veilleuse ce qui déterminera pour le calculateur l'action statistique et l'impression des paramètres du décollage.

Il doit être entendu que l'invention n'est nullement limitée à la forme de réalisation décrite et que bien des modifications peuvent être apportées à cette dernière sans sortir du cadre du présent brevet.

C'est ainsi que l'on pourrait prévoir un rayon laser émis d'une extrémité de chaque piste 3 suivant l'axe de celle-ci et capté à l'autre extrémité pour que ce faisceau soit interrompu par un avion situé sur la piste. Ce dispositif pourrait compléter les radars 2 ou se substituer à ces derniers.

Pour parfaire l'identification d'un véhicule avec certitu de, le véhicule qui se présente à une barrière de sécurité, on prévoit sur lui un émetteur, statique ou non, générateur d'une hyperfréquence codée qui permettra une identification infaillible pour le système du véhicule considéré. Une plaque magnétique codée propre à chaque véhicule remplacera, dans certains cas, le générateur avec un même résultat.

On pourrait encore prévoir, le long des pistes 3 et soit en combinaison avec les radars 1 à faisceau étroit, soit en remplacement de ces radars 1, une rangée d'émetteurs de rayon laser équidistants disposée, le long d'un des bords longitudinaux de la piste 3 et parallèlement à cette dernière, pour que les rayons soient sensiblement parallèles entre eux, parallèles au sol et transversaux à l'axe de la piste et à une hauteur telle qu'ils soient interceptés par un véhicule ou avion à l'arrêt ou en mouvement sur la piste. Le long de l'autre bord longitudinal de la piste, on prévoit une rangée de récepteurs de rayon équidistants disposée parallèlement à la piste. Les récepteurs, dont le nombre est égal à celui des émetteurs et qui sont destinés chacun à recevoir le rayon émis par l'émetteur correspondant, sont alors connectés chacun à l'ordinateur pour fournir à celui-ci une information lorsqu'il n'est plus activé par le rayon laser. Les rayons laser émis par les émetteurs susdits sont avantageusement perpendiculaires à l'axe de la piste, la distance qui sépare deux de ces rayons voisins étant comprise entre 50 et 150 m, la distance des rayons du sol étant comprise entre 0,25 et 1 m et les rangées d'émetteurs et de récepteurs étant disposées à au moins 1 m en retrait des lampes de balisage de la piste.

## Revendications

1. Procédé pour le contrôle au sol, soit de nuit ou par mauvaise visibilité, soit par bonne visibilité lorsqu'il n'est pas possible d'avoir de la tour de contrôle une bonne vue d'ensemble de l'aéroport, de tous les engins, avions et véhicules, tels que véhicules de service et de sécurité, stationnant ou circulant sur le site de l'aéroport, en particulier les pistes d'envol ou d'atterrissage ainsi que toutes les voies d'accès à ces pistes, ledit procédé étant caractérisé en ce qu'il consiste à disposer, au moins le long des pistes et à leurs extrémités ainsi qu'aux intersections éventuelles de toutes les voies d'accès aux pistes, des systèmes de contrôle différents fournissant chacun des informations distinctes relatives au moins aux mobiles, à l'arrêt ou en mouvement, se trouvant sur le site, à analyser toutes les informations susdites par ordinateur dont les mémoires contiennent les caractéristiques des mobiles circulant sur le site, à activer, à partir de l'ordinateur, d'une part, des écrans cathodiques et/ou synoptiques permettant aux contrôleurs de visualiser les pistes et accès ainsi que tous les éléments, en particulier les mobiles, à l'arrêt ou en mouvement, présents sur ces pistes et accès avec des caractéristiques d'identification, et, d'autre part, des moyens de signalisation prévus sur le site et destinés à donner des indications quant aux libertés et interdictions de circuler et des moyens d'alarme associés aux écrans activés quand une interdiction n'est pas respectée.

2. Procédé suivant la revendication 1, caractérisé en ce qu'on équipe au moins une partie des mobiles, appelés à circuler sur le site de l'aéroport, de moyens d'avertissement pour les opérateurs desdits mobiles les informant d'une interdiction ou d'un danger associé à la zone qu'ils occupent.

3. Procédé suivant l'une ou l'autre des revendications 1 et 2, caractérisé en ce que, sur base des informations traitées par l'ordinateur et dès que le contrôleur autorise la circulation d'un avion sur une voie ou piste donnée, l'ordinateur crée le long de celle-ci une zone de protection.

4. Procédé suivant la revendication 3, caractérisé en ce que l'ordinateur détermine toutes les intersections de la voie ou piste empruntée par l'avion avec les autres voies ou pistes de l'aéroport et crée à chacune de ces intersections une zone de protection.

5. Procédé suivant l'une quelconque des revendications 1 à 4, caractérisé en ce que l'ordinateur analyse les informations provenant de moyens de contrôle disposés à intervalles réguliers le long des pistes d'envol ou d'atterrissage pour indiquer sur les écrans susdits la progression et la vitesse de circulation d'un avion se déplaçant sur ces pistes.

6. Procédé suivant l'une quelconque des revendications 1 à 5, caractérisé en ce que l'ordinateur analyse les informations provenant de moyens de contrôle associés aux pistes pour indiquer sur les écrans précités le moment où un avion circulant sur ces pistes quitte le sol.

7. Procédé suivant l'une quelconque des revendications 1 à 6, caractérisé en ce que l'ordinateur analyse conjointement les informations provenant des moyens de contrôle au sol et celles provenant du contrôle du trafic aérien pour indiquer toute éventuelle situation de conflit.

8. Installation pour la mise en oeuvre du procédé suivant l'une quelconque des revendications 1 à 7, caractérisée en ce qu'elle comprend au moins des moyens de contrôle associés aux pistes d'envol et d'atterrissage et agencés pour détecter tout élément situé sur ces pistes, en particulier les mobiles à l'arrêt ou en mouvement, des moyens de contrôle associés aux voies d'accès éventuelles et à toutes les intersections de ces dernières avec les pistes agencés pour détecter tout mobile à l'arrêt ou en mouvement sur lesdites voies d'accès à proximité de ces intersections, des moyens pour transmettre les informations en provenance des moyens de contrôle à un ordinateur agencé pour comparer les informations reçues des moyens de contrôle précités à des informations mises en mémoire et concernant les divers mobiles autorisés à se déplacer sur les pistes et voies d'accès, des écrans cathodiques et/ou synoptiques disposés au moins dans la tour de contrôle et activés par l'ordinateur pour visualiser, d'une part, les pistes et voies d'accès à celles-ci et, d'autre part, les éléments et en particulier les mobiles, à l'arrêt ou en mouvement sur ces voies et pistes munies de moyens de contrôle, avec leurs caractéristiques d'indentification, des moyens de signalisation optiques et/ou sonores associés aux pistes et voies d'accès pour renseigner les opérateurs des mobiles au sujet des libertés et interdictions de circuler dans les zones protégées par les moyens de contrôle et des moyens d'alarme associés aux écrans précités et agencés pour être activés par l'ordinateur quand une interdiction de circuler n'est pas respectée.

9. Installation suivant la revendication 8, caractérisée en ce que les moyens de contrôle associés à chacune des pistes surveillées sont constitués par une rangée de radars (1) équidistants à faisceau étroit disposée parallèlement à la piste - (3) pour que les faisceaux soient sensiblement parallèles et transversaux à l'axe de la piste, par un radar (2) à faisceau large installé en début de piste et couvrant la zone de stationnement des avions en instance de décollage, et par des radars à faisceau large échelonnés le long de la piste aux endroits de décollage ou d'atterrissage des différents types d'avions et dont les faisceaux sont orientés pour suivre un avion en mouvement.

10. Installation suivant la revendication 9, caractérisée en ce que les faisceaux de radars (1) à faisceau étroit sont perpendiculaires à l'axe de la piste (3), la distance qui sépare deux de ces radars (1) voisins est de l'ordre de 150 m, le champ de vision desdits radars, qui fonctionnent sur une fréquence de 9,9 gigaHz, est de l'ordre de 9°, la distance des radars du sol est fonction de leurs caractéristiques et la rangée desdits radars est disposée à environ 1 m en retrait des lampes de balisage de la piste.

11. Installation suivant l'une quelconque des revendications 8 à 10, caractérisée en ce que les moyens de contrôle associés à chacune des pistes surveillées comprennent, le long d'un des bords longitudinaux de la piste, une rangée d'émetteurs de rayon laser équidistants disposées parallèlement à la piste pour que les rayons soient sensiblement parallèles entre eux, parallèles au sol et transversaux à l'axe de la piste et à une hauteur qu'ils soient interceptés par un véhicule ou avion à l'arrêt ou en mouvement sur la piste et, le long de l'autre bord longitudinal de la piste, une rangée de récepteurs de rayon équidistants disposée parallèlement à la piste, les récepteurs, dont le nombre est égal à celui des émetteurs et qui sont destinés chacun à recevoir le rayon émis par l'émetteur correspondant, étant connectés chacun à l'ordinateur pour fournir à celui-ci une information lorsqu'il n'est plus activé par le rayon laser.

12. Installation suivant la revendication 11, caractérisée en ce que les rayons laser émis par les émetteurs susdits sont perpendiculaires à l'axe de la piste, la distance qui sépare deux de ces rayons voisins étant comprise entre 50 et 150 m, la distance des rayons du sol étant comprise entre 0,25 et 1 m et les rangées d'émetteurs et de récepteurs étant disposées à au moins 1 m en retrait des lampes de balisage de la piste.

13. Installation suivant l'une quelconque des revendications 8 à 12, caractérisée en ce qu'elle comprend au moins deux caméras de télévision - (4) orientables, prévues pour fonctionner avec des luminosités extrêmement faibles, disposées en début et en fin de chacune des pistes (3), ces caméras (4) étant reliées à l'ordinateur qui numérise et mémorise les images reçues pour les comparer ensuite aux modules mis en mémoire et identifier le mobile filmé par les caméras, le module objet étant intégré et positionné sur les écrans cathodiques et/ou synoptiques précités.

14. Installation suivant l'une quelconque des revendications 8 a 13, caractérisé en ce qu'elle comprend, à une des extrémités de la piste (3), un émetteur de rayon laser agencé pour que ce rayon soit dans l'axe de la piste et à une hauteur telle qu'il soit intercepté par un avion à l'arrêt ou en mouvement sur la piste, un récepteur de ce rayon étant disposé à l'autre extrémité de la piste et connecté à l'ordinateur pour fournir à celui-ci une information lorsqu'il n'est plus activé par le rayon laser.

15. Installation suivant l'une quelconque des revendications 8 à 14, caractérisée en ce que les moyens de contrôle associés à chaque voie d'accès et à chacune des intersections de ces dernières avec les pistes (3) comprennent au moins deux boucles magnétiques (7) installées dans le revêtement des voies d'accès, en amont des pistes (3), et agencées pour détecter le passage d'un mobile et définir son sens de circulation, ces boucles magnétiques (7) étant associées à l'ordinateur pour que, suite aux informations fournies par ces boucles et par les moyens de contrôle de piste, ledit ordinateur active au moins un signal (5, 6) optique et/ou sonore autorisant ou interdisant l'accès à la piste.

16. Installation suivant la revendication 15, caractérisée en ce que les moyens de contrôle susdits associés à chaque voie d'accès aux pistes (3) comprend, en aval du signal (5) optique et/ou sonore précité, une troisième boucle magnétique (7') noyée dans le revêtement, les informations transmises à l'ordinateur par cette troisième boucle (7') étant analysées conjointement avec l'état du signal (5) optique et/ou sonore, l'ordinateur étant agencé pour activer une alarme, au moins dans la tour de contrôle, si cette troisième boucle (7') est franchie alors que le signal (5) indique une interdiction de passage.

17. Installation suivant l'une ou l'autre des revendications 15 et 16, caractérisée en ce que les moyens de contrôle, associés à chacune des voies d'accès aux pistes, comprend un radar (8) dont le faisceau est orienté vers les boucles magnétiques - (7) et qui est connecté à l'ordinateur pour fournir à ce dernier des informations qu'il analyse conjointement aux informations fournies par les boucles magnétiques (7), ledit ordinateur activant, en cas de conflit, les moyens d'alarme précités.

18. Installation suivant l'une quelconque des revendications 8 à 17, caractérisé en ce qu'elle comprend, aux abords des intersections de pistes et de voies d'accès, des générateurs hyperfréquence, les mobiles circulant sur ces pistes et voies étant équipés de récepteurs hyperfréquence agencés pour activer un signal auditif et/ou lumineux renseignant l'opérateur à l'approche de la zone dans laquelle émettent ces générateurs.

19. Installation suivant l'une quelconque des revendications 8 à 18, caractérisée en ce que, à chacun des emplacements déterminés occupés par les véhicules d'intervention, tels que pompes et ambulances, elle comprend un récepteur hyperfréquence, chacun des véhicules d'intervention étant pourvu d'un émetteur hyperfréquence, les récepteurs susdits étant connectés à l'ordinateur qui, après analyse des informations, active les écrans cathodiques et/ou synoptiques pour que les véhicules d'intervention puissent être visualisés lorsqu'ils occupent leurs emplacements déterminés.

20. Installation suivant l'une quelconque des revendications 8 à 19, caractérisée en ce que la signalisation optique met en oeuvre des fibres optiques.

Fig.1.

0 220 752

Fig.2.